# EUROPEAN PATENT APPLICATION

(11) **EP 3 242 495 A1**
(43) Date of publication of application: **08.11.2017**
(21) Application number: 14909413.8
(22) Date of filing: 30.12.2014
(51) Int. Cl.: H04W 4/02, G06F 17/30

(54) **METHOD AND APPARATUS FOR ACQUIRING GEOGRAPHICAL LOCATION INFORMATION, AND ELECTRONIC TERMINAL**

(71) Applicant: Huawei Technologies Co., Ltd., Longgang District Shenzhen, Guangdong 518129 (CN)
(72) Inventor: WU, Gang, Shenzhen Guangdong 518129 (CN)
(74) Representative: Isarpatent
(86) International application number: PCT/CN2014/095663
(87) International publication number: WO 2016/106602

(57) **Abstract**

The present invention relates to the field of electronic device applications, and discloses a method and an apparatus for obtaining geographical location information, and an electronic terminal, which are used to resolve a problem that geographical location information of a file cannot be obtained when a GPS positioning function and a network positioning function cannot be normally used. A specific embodiment provided by the present invention includes: obtaining attribute information of a reference object; when the attribute information of the reference object includes geographical location information, determining at least one reference object with a minimum difference value between a generation moment of the reference object and a generation moment of a to-be-operated object, and using geographical location information of the determined at least one reference object as geographical location information of the to-be-operated object. This embodiment of the present application is mainly applied to a procedure of obtaining geographical location information.

## Description

### TECHNICAL FIELD

The present invention relates to the field of electronic device applications, and in particular, to a method and an apparatus for obtaining geographical location information, and an electronic terminal.

### BACKGROUND

Currently, some electronic devices have a multimedia file photographing function and have a GPS (Global Positioning System, global positioning system) positioning function and/or a network positioning function. The electronic devices may obtain geographical location information of a photographed multimedia file, and add the geographical location information to the multimedia file, so that a user views the multimedia file or the electronic device classifies the multimedia file according to location information of photographing. For example, when a user takes a photo by using a mobile phone, because the mobile phone has a GPS positioning function and/or a network positioning function, geographical location information of a photographing location may be stored in attribute information of the photo, so that when the user browses the photo, the photographing location of the photo is displayed to the user, or the photo is classified according to the photographing location, and the user can conveniently search for the photo according to the photographing location. However, the foregoing functions are implemented when the mobile phone has the GPS positioning function and/or the network positioning function and the functions are available. However, when the user takes a photo but the GPS positioning function and/or the network positioning function of the mobile phone cannot be normally used, geographical location information of a photographing location cannot be stored in the photo. As a result, when browsing such a photo, the user does not know the photographing location of the photo.

### SUMMARY

Embodiments of the present application provide a method and an apparatus for obtaining geographical location information, and an electronic terminal, so as to resolve a problem that geographical location information of a to-be-operated object cannot be obtained when a GPS positioning function and a network positioning function cannot be normally used.

To achieve the foregoing objective, the following technical solutions are used in the embodiments of the present invention.

According to a first aspect, an embodiment of the present invention provides a method for obtaining geographical location information, including:
obtaining attribute information of a reference object corresponding to a to-be-operated object;
when the attribute information of the reference object includes geographical location information, determining at least one reference object with a minimum difference value between a generation moment of the reference object and a generation moment of the to-be-operated object, and using geographical location information of the determined at least one reference object as geographical location information of the to-be-operated object, where
the to-be-operated object is a file in which attribute information does not include the geographical location information, the reference object is a file, and the difference value between the generation moment of the reference object and the generation moment of the to-be-operated object is included in a preset value field.

With reference to the first aspect, in a first possible implementation manner of the first aspect, when the attribute information of the reference object does not include the geographical location information, the method further includes:
obtaining geographical location information of a reference application within a preset time period, where difference values between start and stop moments of the preset time period and the generation moment of the to-be-operated object are included in the preset value field; and writing the geographical location information of the reference application into the geographical location information of the to-be-operated object; or
obtaining geographical location information of an auxiliary reference object and obtaining geographical location information of a reference application within a preset time period, where difference values between start and stop moments of the preset time period and the generation moment of the to-be-operated object are included in the preset value field; and writing same geographical location information between the geographical location information of the reference application and the geographical location information of the auxiliary reference object into the geographical location information of the to-be-operated object, where the auxiliary reference object is a file with a difference value between a generation moment of the file and the generation moment of the to-be-operated object being not included in the preset value field.

With reference to the first aspect, in a second possible implementation manner of the first aspect, the determining at least one reference object with a minimum difference value between a generation moment of the reference object and a generation moment of the to-be-operated object, and using geographical location information of the determined at least one reference object as geographical location information of the to-be-operated object specifically includes:
obtaining a file with a minimum difference value between a generation moment of the file and the generation moment of the to-be-operated object, where
when the generation moment of the file with the minimum difference value between the generation moment of the file and the generation moment of the to-be-operated object is earlier or later than the generation moment of the to-be-operated object, the reference object is the single file with the minimum difference value between the generation moment of the file and the generation moment of the to-be-operated object; and
writing geographical location information of the single file into the geographical location information of the to-be-operated object.

With reference to the first aspect, in a third possible implementation manner of the first aspect, the determining at least one reference object with a minimum difference value between a generation moment of the reference object and a generation moment of the to-be-operated object, and using geographical location information of the determined at least one reference object as geographical location information of the to-be-operated object specifically includes:
obtaining a file with a minimum difference value between a generation moment of the file and the generation moment of the to-be-operated object, where
when the generation moment of the file with the minimum difference value between the generation moment of the file and the generation moment of the to-be-operated object includes generation moments that are earlier and later than the generation moment of the to-be-operated object, the reference object is multiple files with minimum difference values between the generation moments of the files and the generation moment of the to-be-operated object; and
writing same geographical location information in geographical location information of the multiple files into the geographical location information of the to-be-operated object.

With reference to the first aspect, in a fourth possible implementation manner of the first aspect, the method further includes:
when the attribute information of the reference object does not include the geographical location information, obtaining geographical location information corresponding to the to-be-operated object; and
writing the geographical location information into the geographical location information of the to-be-operated object.

According to a second aspect, an embodiment of the present invention provides an apparatus for obtaining geographical location information, including:
an obtaining unit, configured to obtain attribute information of a reference object corresponding to a to-be-operated object;
a determining unit, configured to: when the attribute information, obtained by the obtaining unit, of the reference object includes geographical location information, determine at least one reference object with a minimum difference value between a generation moment of the reference object and a generation moment of the to-be-operated object; and
a location write unit, configured to use, as geographical location information of the to-be-operated object, geographical location information of the at least one reference object determined by the determining unit, where
the to-be-operated object is a file in which attribute information does not include the geographical location information, the reference object is a file, and the difference value between the generation moment of the reference object and the generation moment of the to-be-operated object is included in a preset value field.

With reference to the second aspect, in a first possible implementation manner of the second aspect, the apparatus further includes:
the obtaining unit, further configured to: when the attribute information of the reference object does not include the geographical location information, obtain geographical location information of a reference application within a preset time period, where
difference values between start and stop moments of the preset time period and the generation moment of the to-be-operated object are included in the preset value field; difference values between start and stop moments of the preset time period and the generation moment of the to-be-operated object are included in the preset value field;
the location write unit, configured to write the geographical location information, obtained by the obtaining unit, of the reference application into the geographical location information of the to-be-operated object; or
the obtaining unit, further configured to obtain geographical location information of an auxiliary reference object and obtain geographical location information of a reference application within a preset time period; and
the location write unit, further configured to write same geographical location information between the geographical location information, obtained by the obtaining unit, of the reference application and the geographical location information of the auxiliary reference object into the geographical location information of the to-be-operated object, where
the auxiliary reference object is a file with a difference value between a generation moment of the file and the generation moment of the to-be-operated object being not included in the preset value field.

With reference to the second aspect, in a second possible implementation manner of the second aspect, the determining unit includes:
an obtaining subunit, configured to obtain a file with a minimum difference value between a generation moment of the file and the generation moment of the to-be-operated object, where
when the generation moment of the file with the minimum difference value between the generation moment of the file and the generation moment of the to-be-operated object is earlier or later than the generation moment of the to-be-operated object, the reference object is the single file with the minimum difference value between the generation moment of the file and the generation moment of the to-be-operated object; and
a first location write subunit, configured to write geographical location information of the single file obtained by the obtaining subunit into the geographical location information of the to-be-operated object.

With reference to the second aspect, in a third possible implementation manner of the second aspect, the determining unit includes:
an obtaining subunit, configured to obtain a file with a minimum difference value between a generation moment of the file and the generation moment of the to-be-operated object, where
when the generation moment of the file with the minimum difference value between the generation moment of the file and the generation moment of the to-be-operated object includes generation moments that are earlier and later than the generation moment of the to-be-operated object, the reference object is multiple files with minimum difference values between the generation moments of the files and the generation moment of the to-be-operated object; and
a second location write subunit, configured to write same geographical location information in geographical location information of the multiple files obtained by the obtaining subunit into the geographical location information of the to-be-operated object.

With reference to the second aspect, in a fourth possible implementation manner of the second aspect, including:
the apparatus further includes:
   the obtaining unit, further configured to: when the attribute information of the reference object does not include the geographical location information, obtain geographical location information corresponding to the to-be-operated object; and
   the location write unit, configured to write the geographical location information obtained by the obtaining unit into the geographical location information of the to-be-operated object.

According to a third aspect, an embodiment of the present invention provides an electronic terminal, including:
a memory, configured to store information that includes a program instruction; and
a processor, separately coupled to the memory to control execution of the program instruction, and specifically configured to obtain attribute information of a reference object corresponding to a to-be-operated object;
when the attribute information of the reference object includes geographical location information, determine at least one reference object with a minimum difference value between a generation moment of the reference object and a generation moment of the to-be-operated object, and use geographical location information of the determined at least one reference object as geographical location information of the to-be-operated object, where
the to-be-operated object is a file in which attribute information does not include the geographical location information, the reference object is a file, and the difference value between the generation moment of the reference object and the generation moment of the to-be-operated object is included in a preset value field.

With reference to the third aspect, in a first possible implementation manner of the third aspect, the processor is further configured to: when the attribute information of the reference object does not include the geographical location information,
obtain geographical location information of a reference application within a preset time period, where difference values between start and stop moments of the preset time period and the generation moment of the to-be-operated object are included in the preset value field; and write the geographical location information of the reference application into the geographical location information of the to-be-operated object; or
obtain geographical location information of an auxiliary reference object and obtain geographical location information of a reference application within a preset time period, where difference values between start and stop moments of the preset time period and the generation moment of the to-be-operated object are included in the preset value field; and write same geographical location information between the geographical location information of the reference application and the geographical location information of the auxiliary reference object into the geographical location information of the to-be-operated object, where the auxiliary reference object is a file with a difference value between a generation moment of the file and the generation moment of the to-be-operated object being not included in the preset value field.

With reference to the third aspect, in a second possible implementation manner of the third aspect,
the processor is further configured to: obtain a file with a minimum difference value between a generation moment of the file and the generation moment of the to-be-operated object, where
when the generation moment of the file with the minimum difference value between the generation moment of the file and the generation moment of the to-be-operated object is earlier or later than the generation moment of the to-be-operated object, the reference object is the single file with the minimum difference value between the generation moment of the file and the generation moment of the to-be-operated object; and
write geographical location information of the single file into the geographical location information of the to-be-operated object.

With reference to the third aspect, in a third possible implementation manner of the third aspect,
the processor is further configured to: obtain a file with a minimum difference value between a generation moment of the file and the generation moment of the to-be-operated object, where
when the generation moment of the file with the minimum difference value between the generation moment of the file and the generation moment of the to-be-operated object includes generation moments that are earlier and later than the generation moment of the to-be-operated object, the reference object is multiple files with minimum difference values between the generation moments of the files and the generation moment of the to-be-operated object; and
write same geographical location information in geographical location information of the multiple files into the geographical location information of the to-be-operated object.

With reference to the third aspect, in a fourth possible implementation manner of the third aspect, the processor is further configured to: when the attribute information of the reference object does not include the geographical location information, obtain geographical location information corresponding to the to-be-operated object; and
write the geographical location information into the geographical location information of the to-be-operated object.

In the method and the apparatus for obtaining geographical location information and the electronic terminal that are provided in the embodiments of the present invention, attribute information of a reference object corresponding to a to-be-operated object is obtained; when the attribute information includes geographical location information, at least one reference object with a minimum difference value between a generation moment of the reference object and a generation moment of the to-be-operated object is determined, and the geographical location information of the reference object is used as geographical location information of the to-be-operated object. As compared with the prior art in which geographical location information of a to-be-operated object can be determined only when a GPS positioning function or a network positioning function can be normally used, in the technical solutions of the present invention, other existing address information can be used to deduce geographical location information of a to-be-operated object, and this process does not need to depend on the GPS positioning function and the network positioning function.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a flowchart of a method for obtaining geographical location information according to an embodiment of the present invention;
FIG. 2 is a flowchart of another method for obtaining geographical location information according to an embodiment of the present invention;
FIG. 3 is a flowchart of another method for obtaining geographical location information according to an embodiment of the present invention;
FIG. 4 is a flowchart of another method for obtaining geographical location information according to an embodiment of the present invention;
FIG. 5 is a flowchart of another method for obtaining geographical location information according to an embodiment of the present invention;
FIG. 5-1 is a flowchart of another method for obtaining geographical location information according to an embodiment of the present invention;
FIG. 6 is a schematic composition diagram of an apparatus for obtaining geographical location information according to an embodiment of the present invention;
FIG. 7 is a schematic composition diagram of another apparatus for obtaining geographical location information according to an embodiment of the present invention; and
FIG. 8 is a schematic structural diagram of an electronic terminal according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

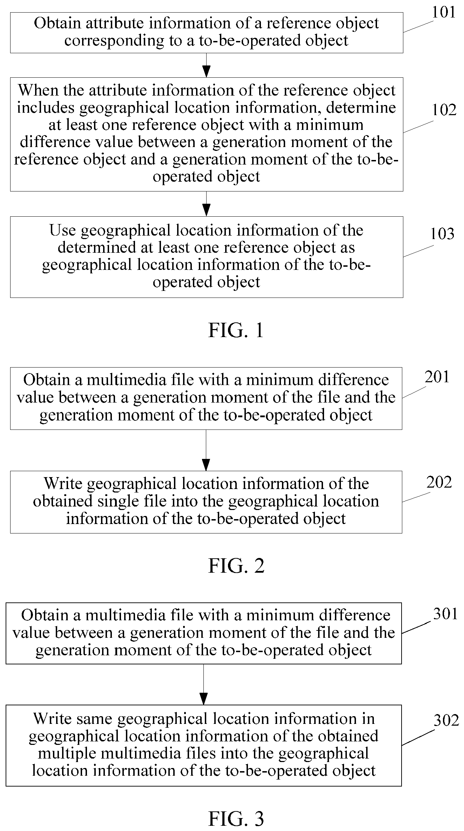

An embodiment of the present application provides a method for obtaining geographical location information. The method is applied to an electronic terminal storing geographical location information. As shown in FIG. 1, the method includes:
101: Obtain attribute information of a reference object corresponding to a to-be-operated object.
102: When the attribute information of the reference object includes geographical location information, determine at least one reference object with a minimum difference value between a generation moment of the reference object and a generation moment of the to-be-operated object.

The to-be-operated object is a file in which attribute information does not include the geographical location information, the reference object is a file, and the difference value between the generation moment of the reference object and the generation moment of the to-be-operated object is included in a preset value field. In this embodiment, a file type of the to-be-operated object and that of the reference object may be the same or different. For example, the to-be-operated object is a photo A, and a file with a minimum difference value between a generation moment of the file and the generation moment of the to-be-operated object is a video B. Therefore, in this case, B is the reference object of A, while file formats of A and B are different.

In this embodiment, the preset value field is a set of difference values between the generation moment of the reference object and the generation moment of the to-be-operated object. An objective of setting a preset value field is to determine the geographical location information of the to-be-operated object more accurately according to the obtained geographical location information of the reference object. Endpoint values of the preset value field may be set according to actual conditions. However, it should be noted that if the specified endpoint values of the preset value field are excessively large, it indicates that the generation moment of the reference object and the generation moment of the to-be-operated object have a relatively large interval. When a time interval is large, correspondingly, a photographing location of the reference object and that of the to-be-operated object may be far away from each other. As a result, the geographical location information of the to-be-operated object determined by using the geographical location information of the reference object is inaccurate. Therefore, during setting of the preset value field in this embodiment of the present invention, it is considered that a user may not have a relatively great location change. For example, a range of the preset value field is set to be 0 to 4 hours.

103: Use geographical location information of the determined at least one reference object as geographical location information of the to-be-operated object.

It should be noted that a file in this embodiment represents a file that has content of geographical location information, and may include a multimedia file and a text file. The multimedia file includes a specific format such as a photo, a video, and an animation, and the text file includes a file of a rich text format, and geographical location information may be added to these files. Moreover, in subsequent embodiments of the present invention, an example in which the file is a multimedia file is used. Execution procedures of obtaining geographical location information of a multimedia file of a specific format and a text file of a specific format are similar, and are no longer correspondingly described one by one in this embodiment.

In the method for obtaining geographical location information provided in this embodiment of the present invention, attribute information of a reference object corresponding to a to-be-operated object is obtained; when the attribute information includes geographical location information, at least one reference object with a minimum difference value between a generation moment of the reference object and a generation moment of the to-be-operated object is determined, and the geographical location information of the reference object is used as geographical location information of the to-be-operated object. As compared with the prior art in which geographical location information of a to-be-operated object can be determined only when a GPS positioning function or a network positioning function can be normally used, in technical solutions of the present invention, other existing address information can be used to deduce geographical location information of a to-be-operated object, and this process does not need to depend on the GPS positioning function and the network positioning function.

In another implementation manner in this embodiment of the present invention, when attribute information of a reference object includes geographical location information, a procedure of obtaining geographical location information of a to-be-operated object is provided. With reference to descriptions of the foregoing steps 102 and 103, that is, at least one reference object with a minimum difference value between a generation moment of the reference object and a generation moment of the to-be-operated object is determined. This implementation procedure specifically includes: a case in which the determined reference object is a single file or multiple files.

First, as shown in FIG. 2, a case in which the determined reference object is a single file is described.

201: Obtain a multimedia file with a minimum difference value between a generation moment of the file and the generation moment of the to-be-operated object.

It should be noted that when the to-be-operated object is a first stored multimedia file, only a reference object with a generation moment later than the generation moment of the to-be-operated object can be obtained. Alternatively, when the to-be-operated object is a last multimedia file in an electronic device, only a multimedia file with a generation moment earlier than the generation moment of the to-be-operated object can be obtained. In the foregoing two conditions, only a single multimedia file with a minimum difference value between a generation moment of the file and the generation moment of the to-be-operated object needs to be obtained.

It should be noted that when the generation moment of the multimedia file in step 201 is earlier or later than the generation moment of the to-be-operated object, the reference object is a single multimedia file with a minimum difference value between a generation moment of the file and the generation moment of the to-be-operated object.

202: Write geographical location information of the obtained single file into the geographical location information of the to-be-operated object.

For example, the geographical location information of the reference object is "Pudong district, Shanghai", and a difference value between the generation moment of the reference object and the generation moment of the to-be-operated object is minimum. In this case, "Pudong district, Shanghai" is written into the geographical location information of the to-be-operated object. Therefore, the geographical location information of the to-be-operated object is "Pudong district, Shanghai".

Secondly, a case in which the determined reference object is multiple files is described. As shown in FIG. 3, an execution procedure of this case includes:
301: Obtain a multimedia file with a minimum difference value between a generation moment of the file and the generation moment of the to-be-operated object.

When the generation moment of the file with the minimum difference value between the generation moment of the file and the generation moment of the to-be-operated object includes generation moments that are earlier and later than the generation moment of the to-be-operated object, the reference object is multiple multimedia files with minimum difference values between the generation moments of the files and the generation moment of the to-be-operated object.

It should be noted that when the to-be-operated object is neither a first multimedia file in an electronic device nor a last multimedia file in the electronic device, and the electronic device has at least three multimedia files, in order to obtain more accurate geographical location information of the to-be-operated object, a reference object with a generation moment earlier than that of the to-be-operated object, and a multimedia file with a generation moment later than that of the to-be-operated object are obtained, so that the geographical location information of the to-be-operated object can be determined according to geographical location information of the two reference objects.

302: Write same geographical location information in geographical location information of the obtained multiple multimedia files into the geographical location information of the to-be-operated object.

With the description of step 302, description is made by using an example in which the obtained geographical location information of the reference object is represented by "street-district-city" and the obtained reference object satisfying a condition is two multimedia files. If in the geographical location information of the two multimedia files, specific street names and information of locations that are more specific than street are different, a same part of the geographical location information in the two multimedia files, that is, the part representing "district-city", is used as the geographical location information of the to-be-operated object. For example, the obtained reference objects satisfying the condition are a reference object 1 and a reference object 2, and the geographical location information of the obtained reference object 1 is "Pudong district, Shanghai", and the geographical location information of the obtained reference object 2 is "Hongkou district, Shanghai". In this case, the same geographical location information in the reference object 1 and the reference object 2 is "Shanghai". Therefore, "Shanghai" is written into the geographical location information of the to-be-operated object.

With reference to the foregoing description of the embodiment shown in FIG. 1, in another implementation manner of this embodiment of the present invention, a process of how to determine the geographical location information of the to-be-operated object when the attribute information of the reference object does not include the geographical location information is described, and is specifically determining the geographical location information of the to-be-operated object by using geographical location information of a reference application or by using geographical location information of a reference application and geographical location information of an auxiliary reference object.

The auxiliary reference object is a multimedia file with a difference value between a generation moment of the file and the generation moment of the to-be-operated object being not included in a preset value field. That is, the auxiliary reference object is a file including geographical location information. However, the difference value between the generation moment of the auxiliary reference object and the generation moment of the to-be-operated object is relatively large, and exceeds a difference value range specified by the preset value field.

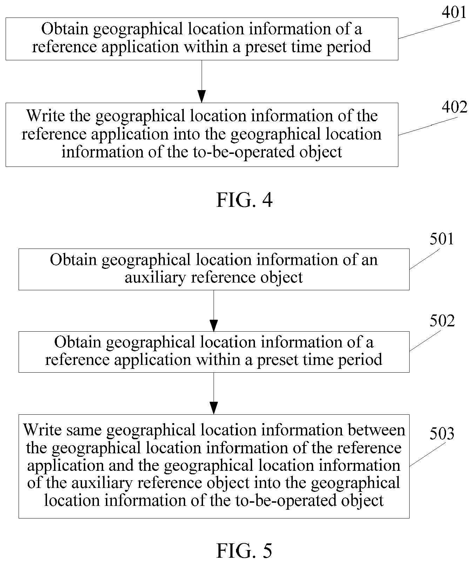

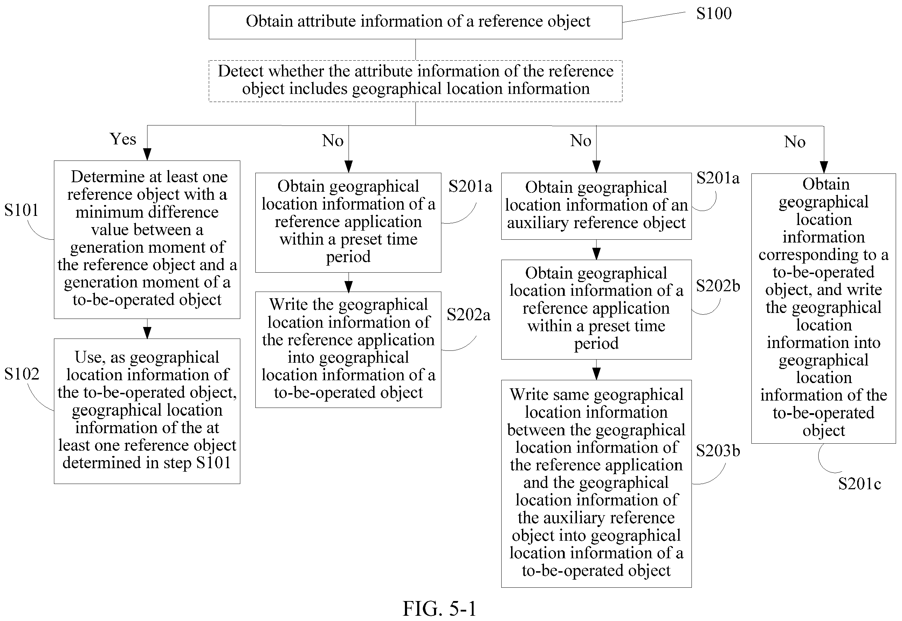

With the description of this step, two manners of determining the geographical location information of the to-be-operated object are included, that is, determining by using geographical location information of a reference application or determining by using geographical location information of a reference application and geographical location information of an auxiliary reference object. A specific determining procedure is described in detail in the embodiments shown in FIG. 4 and FIG. 5 of the following steps.

The case in which the reference object includes the geographical location information and the case in which the reference object does not include the geographical location information that are described in this embodiment are two parallel execution procedures. Therefore, before the steps in this embodiment are executed, a step of determining whether the attribute information of the reference object has the geographical location information is implicitly included, and is no longer shown in the accompanying drawings.

In an implementation manner provided in this embodiment of the present invention, when attribute information of a reference object does not include geographical location information, a procedure of determining geographical location information of a to-be-operated object by using a reference application is provided. As shown in FIG. 4, the procedure includes:
401: Obtain geographical location information of the reference application within a preset time period.

Difference values between start and stop moments of the preset time period and the generation moment of the to-be-operated object are included in the preset value field. In this embodiment, the reference application may be any application with a positioning function, for example, a weathercast application (Moji Weather), and a chatting tool (WeChat or QQ). Moreover, after these applications perform real-time positioning, records of locations where a device is located can be stored within a particular time period.

402: Write the geographical location information of the reference application into the geographical location information of the to-be-operated object.

In another embodiment provided in embodiments of the present invention, another method for determining the geographical location information of the to-be-operated object when attribute information of a reference object does not include geographical location information is described in detail. A procedure of determining the geographical location information of the to-be-operated object by using geographical location information of a reference application and geographical location information of an auxiliary reference object is specifically described. As shown in FIG. 5, the method includes:
501: Obtain geographical location information of an auxiliary reference object.
502: Obtain geographical location information of a reference application within a preset time period.

Difference values between start and stop moments of the preset time period and the generation moment of the to-be-operated object are included in the preset value field. In this embodiment, the obtained reference application is an application with a minimum difference value between a moment of obtaining the geographical location information and the generation moment of the to-be-operated object.

503: Write same geographical location information between the geographical location information of the reference application and the geographical location information of the auxiliary reference object into the geographical location information of the to-be-operated object.

It should be noted that a procedure of writing the same geographical location information between the geographical location information of the reference application and the geographical location information of the auxiliary reference object into the geographical location information of the to-be-operated object described in step 503 and a process of writing the same geographical location information in the geographical location information of multiple multimedia files into the geographical location information of the to-be-operated object described in the foregoing step 302 are similar, and are no longer described herein.

Another embodiment provided in the present invention provides a method for obtaining geographical location information. This embodiment provides a procedure of determining geographical location information of a to-be-operated object when attribute information of a reference object does not include geographical location information. Different from the foregoing method procedures described in FIG. 3, FIG. 4, and FIG. 5, in this embodiment, geographical location information of the reference object, an auxiliary reference object, or a reference application may not be used, but instead, geographical location information corresponding to the to-be-operated object is obtained, and the geographical location information is written into the geographical location information of the to-be-operated object.

In this embodiment, a specific manner of obtaining the geographical location information corresponding to the to-be-operated object includes, but is not limited to, the following three forms:

A first form: Directly receive geographical location information input by a user.

A second form: Detect a drag operation by a user on an icon corresponding to a to-be-operated object, and determine geographical location information corresponding to the to-be-operated object by means of the drag operation.

It should be noted that in the second form, the geographical location information may be coordinates of a geographical location. Drag refers to that the user drags the icon corresponding to the to-be-operated object on a map. When it is detected that the user stops dragging, a coordinate point that is of a center point of the icon corresponding to the to-be-operated object and that corresponds to a coordinate point on the map is the geographical location information corresponding to the to-be-operated object.

In this embodiment, the coordinates of a geographical location are a representation form of the geographical location information of the to-be-operated object. Certainly, the geographical location information may also be other data for representing a location, and is no longer specifically described in this embodiment one by one.

A third form: Analyze feature information of the to-be-operated object, determine, from a network database, an image that has same feature information with the to-be-operated object, and write geographical location information of the image in the network database into the geographical location information of the to-be-operated object.

It should be noted that in the third form, the feature information in the to-be-operated object is first obtained. The feature information of the to-be-operated object is then compared with an image in the network database, and an image that has the same feature information with the to-be-operated object is determined, and geographical location information of the image is obtained. Finally, the geographical location information is used as the geographical location information of the to-be-operated object and is written into the attribute information of the to-be-operated object. For example, feature information obtained through analysis of a to-be-operated object is the Oriental Pearl TV Tower. Therefore, through comparison, feature information obtained from the network database is also geographical location information of an image of the Oriental Pearl TV Tower. If it is obtained that the geographical location information of the image is "Pudong district, Shanghai", "Pudong district, Shanghai" is written into the geographical location information of the to-be-operated object.

Another embodiment of the present invention provides a method for obtaining geographical location information, and this embodiment describes an entire execution procedure of the method. As shown in FIG. 5-1, the execution procedure includes:
S100: Obtain attribute information of a reference object.

Further, when the attribute information of the reference object includes geographical location information, the following steps S101 and S102 are executed; and when the attribute information of the reference object does not include geographical location information, the following steps S201a and S202a, steps S201a and S202a, or step S201c is executed. S201a and S202a represent one execution case, S201a and S202a indicate another execution case, and S201c indicates a third execution case.

S101: Determine at least one reference object with a minimum difference value between a generation moment of the reference object and a generation moment of a to-be-operated object.

S102: Use the geographical location information of the at least one reference object determined in step S101 as geographical location information of the to-be-operated object.

With reference to the foregoing description of step S102, a specific execution procedure of S102 includes the following two cases: A first case includes the following two steps S1021 and S1022:
S1021: Obtain a single file with a minimum difference value between a generation moment of the file and the generation moment of the to-be-operated object.
S1022: Write geographical location information of the single file into the geographical location information of the to-be-operated object.

A second case includes the following steps S1023 and S1024:
S1023: Obtain multiple files with minimum difference values between generation moments of the files and the generation moment of the to-be-operated object.
S1024: Write same geographical location information in geographical location information of the multiple files into the geographical location information of the to-be-operated object.
5201 a: Obtain geographical location information of a reference application within a preset time period.
S202a: Write the geographical location information of the reference application into geographical location information of a to-be-operated object.
S201b: Obtain geographical location information of an auxiliary reference object.

The corresponding description of the auxiliary reference object is the same as the relevant description involved in the foregoing step 302, and is no longer described herein.

S202b: Obtain geographical location information of a reference application within a preset time period.

S203b: Write same geographical location information between the geographical location information of the reference application and the geographical location information of the auxiliary reference object into geographical location information of a to-be-operated object.

S201c: Obtain geographical location information corresponding to a to-be-operated object, and write the geographical location information into geographical location information of the to-be-operated object.

It should be noted that relevant content of three forms of obtaining the geographical location information corresponding to the to-be-operated object in step S201c is the same as that in the foregoing embodiment, and is no longer described herein.

In the method for obtaining geographical location information provided in this embodiment of the present invention, attribute information of a reference object is obtained; when the attribute information of the reference object includes geographical location information, at least one reference object with a minimum difference value between a generation moment of the reference object and a generation moment of a to-be-operated object is determined, and the geographical location information of the reference object is used as geographical location information of the to-be-operated object; and when the attribute information of the reference object does not include geographical location information, the geographical location information of the to-be-operated object is determined by using geographical location information of a reference application and/or geographical location information of an auxiliary reference object. As compared with the prior art in which geographical location information of a to-be-operated object can be determined only when a GPS positioning function or a network positioning function can be normally used, in technical solutions of the present invention, other existing address information can be used to deduce geographical location information of a to-be-operated object, and this process does not need to depend on the GPS positioning function and the network positioning function.

With reference to the foregoing description of the procedure of the method for obtaining geographical location information, in this embodiment, the involved reference object, the auxiliary reference object, and the to-be-operated object are all files generated by using an electronic terminal. Descriptions of the files are the same as those in relevant description in the foregoing step 103, and are no longer described herein. Moreover, in this embodiment, in a same embodiment, specific formats of the reference object, the auxiliary reference object, and the to-be-operated object are the same or different. For example, when the to-be-operated object is a photo, the corresponding reference object and the corresponding auxiliary reference object may be videos or images.

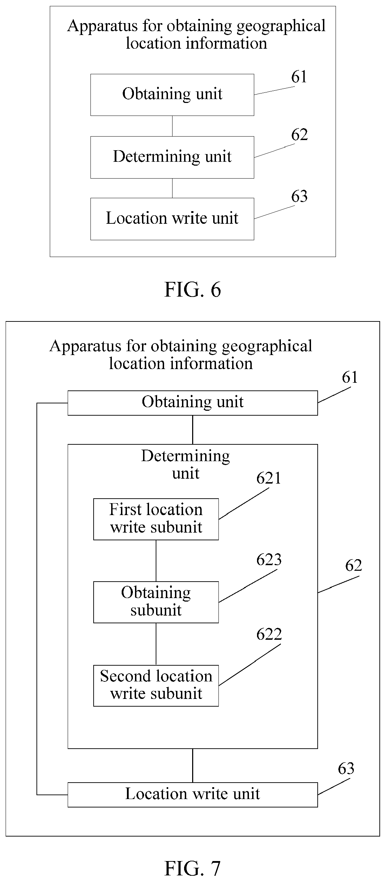

This embodiment of the present invention further provides an apparatus for obtaining geographical location information. As shown in FIG. 6, the apparatus includes: an obtaining unit 61, a determining unit 62, and a location write unit 63.

The obtaining unit 61 is configured to obtain attribute information of a reference object corresponding to a to-be-operated object.

The determining unit 62 is configured to: when the attribute information, obtained by the obtaining unit 61, of the reference object includes geographical location information, determine at least one reference object with a minimum difference value between a generation moment of the reference object and a generation moment of the to-be-operated object.

The location write unit 63 is configured to use, as geographical location information of the to-be-operated object, geographical location information of the at least one reference object determined by the determining unit 62.

The to-be-operated object is a file in which attribute information does not include the geographical location information, the reference object is a file, and the difference value between the generation moment of the reference object and the generation moment of the to-be-operated object is included in a preset value field.

An optional composition manner of the apparatus provided in this embodiment also includes:
the obtaining unit 61, further configured to: when the attribute information of the reference object does not include the geographical location information, obtain geographical location information of a reference application within a preset time period, where
difference values between start and stop moments of the preset time period and the generation moment of the to-be-operated object are included in the preset value field; difference values between start and stop moments of the preset time period and the generation moment of the to-be-operated object are included in the preset value field;
the location write unit 63, further configured to write the geographical location information, obtained by the obtaining unit 61, of the reference application into the geographical location information of the to-be-operated object;
the obtaining unit 61, further configured to obtain geographical location information of an auxiliary reference object and obtain geographical location information of a reference application within a preset time period; and
the location write unit 63, further configured to write same geographical location information between the geographical location information, obtained by the obtaining unit 61, of the reference application and the geographical location information of the auxiliary reference object into the geographical location information of the to-be-operated object.

The auxiliary reference object is a file with a difference value between a generation moment of the file and the generation moment of the to-be-operated object being not included in a preset value field.

In another embodiment provided in the present invention, as shown in FIG. 7, the determining unit 62 further includes: a first location write subunit 621, a second location write subunit 622, and an obtaining subunit 623. The apparatus further includes: a location write unit 63.

The obtaining subunit 623 is configured to obtain a file with a minimum difference value between a generation moment of the file and the generation moment of the to-be-operated object.

When the generation moment of the file with the minimum difference value between the generation moment of the file and the generation moment of the to-be-operated object is earlier or later than the generation moment of the to-be-operated object, the reference object is the single file with the minimum difference value between the generation moment of the file and the generation moment of the to-be-operated object.

The first location write subunit 621 is configured to write the geographical location information of the single file obtained by the obtaining subunit 623 into the geographical location information of the to-be-operated object.

When the attribute information of the reference object does not include the geographical location information, the apparatus further includes:

The obtaining subunit 623 is configured to obtain a file with a minimum difference value between a generation moment of the file and the generation moment of the to-be-operated object.

It should be noted that when the generation moment of the file with the minimum difference value between the generation moment of the file and the generation moment of the to-be-operated object includes generation moments that are earlier and later than the generation moment of the to-be-operated object, the reference object is multiple files with minimum difference values between the generation moments of the files and the generation moment of the to-be-operated object.

The second location write subunit 622 is configured to write same geographical location information in geographical location information of the multiple files obtained by the obtaining subunit 621 into the geographical location information of the to-be-operated object.

In another embodiment provided in the present invention, the apparatus further includes:

The obtaining unit 61 is further configured to: when the attribute information of the reference object does not include the geographical location information, obtain the geographical location information corresponding to the to-be-operated object.

The location write unit 63 is further configured to write the geographical location information obtained by the obtaining unit 61 into the geographical location information of the to-be-operated object.

It should be noted that the foregoing apparatus shown in FIG. 6 and FIG. 7 may be used to implement the method procedure shown in FIG. 1 to FIG. 5. For ease of description, only parts relevant to this embodiment of the present invention are shown. For specific technical details that are not disclosed, refer to descriptions of relevant content of embodiments of the present invention shown in FIG. 1 to FIG. 5.

For the apparatus for obtaining geographical location information provided in this embodiment of the present invention, an obtaining unit obtains attribute information of a reference object corresponding to a to-be-operated object; when the attribute information includes geographical location information, a determining unit determines at least one reference object with a minimum difference value between a generation moment of the reference object and a generation moment of the to-be-operated object; further, a location write unit uses the geographical location information of the reference object as geographical location information of the to-be-operated object; and when the attribute information of the reference object does not include the geographical location information, the obtaining unit obtains geographical location information of a reference application and/or geographical location information of an auxiliary reference object, and geographical location information corresponding to the to-be-operated object, and the location write unit writes the obtained geographical location information of the reference application into the geographical location information of the to-be-operated object. As compared with the prior art in which geographical location information of a to-be-operated object can be determined only when a GPS positioning function or a network positioning function can be normally used, in technical solutions of the present invention, other existing address information can be used to deduce geographical location information of a to-be-operated object, and this process does not need to depend on the GPS positioning function and the network positioning function.

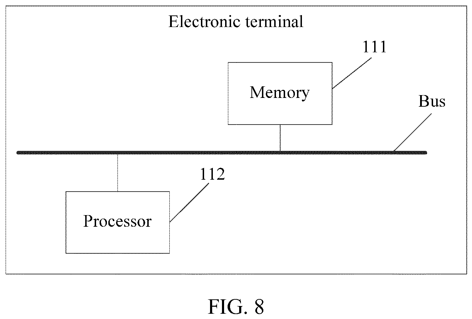

An embodiment of the present invention provides an electronic terminal. As shown in FIG. 8, the electronic terminal includes: a memory 111 and a processor 112. The memory 111 and the processor 112 are connected through a bus, and may transmit data to each other.

The memory 111 is configured to store information that includes a program instruction.

The processor 112 is separately coupled to the memory to control execution of the program instruction, and is specifically configured to:
obtain attribute information of a reference object corresponding to a to-be-operated object; when the attribute information of the reference object includes geographical location information, determine at least one reference object with a minimum difference value between a generation moment of the reference object and a generation moment of the to-be-operated object, and use geographical location information of the determined at least one reference object as geographical location information of the to-be-operated object.

The to-be-operated object is a file in which attribute information does not include the geographical location information, the reference object is a file, and the difference value between the generation moment of the reference object and the generation moment of the to-be-operated object is included in a preset value field.

The processor 112 is further configured to: when the attribute information of the reference object does not include the geographical location information, obtain geographical location information of a reference application within a preset time period, and write the geographical location information of the reference application into the geographical location information of the to-be-operated object.

Difference values between start and stop moments of the preset time period and the generation moment of the to-be-operated object are included in the preset value field.

The processor 112 is further configured to obtain geographical location information of an auxiliary reference object, obtain geographical location information of a reference application within a preset time period, and write same geographical location information between the geographical location information of the reference application and the geographical location information of the auxiliary reference object into the geographical location information of the to-be-operated object.

Difference values between start and stop moments of the preset time period and the generation moment of the to-be-operated object are included in the preset value field, and the auxiliary reference object is a file with a difference value between a generation moment of the file and the generation moment of the to-be-operated object being not included in the preset value field.

In an optional composition manner of the electronic terminal provided in this embodiment, the processor 112 is further configured to obtain a file with a minimum difference value between a generation moment of the file and the generation moment of the to-be-operated object. When the generation moment of the file with the minimum difference value between the generation moment of the file and the generation moment of the to-be-operated object is earlier or later than the generation moment of the to-be-operated object, geographical location information of a single file is written into the geographical location information of the to-be-operated object.

The reference object is the single file with the minimum difference value between the generation moment of the file and the generation moment of the to-be-operated object.

The processor 112 is further configured to: obtain a file with a minimum difference value between a generation moment of the file and the generation moment of the to-be-operated object; and when the generation moment of the file with the minimum difference value between the generation moment of the file and the generation moment of the to-be-operated object includes generation moments that are earlier and later than the generation moment of the to-be-operated object, write same geographical location information in geographical location information of the multiple files into the geographical location information of the to-be-operated object.

The reference object is multiple files with minimum difference values between the generation moments of the files and the generation moment of the to-be-operated object.

The processor 112 is further configured to: when the attribute information of the reference object does not include the geographical location information, obtain geographical location information corresponding to the to-be-operated object; and write the geographical location information into the geographical location information of the to-be-operated object.

It should be noted that the electronic terminal shown in FIG. 8 is configured to execute the method procedures shown in FIG. 1 to FIG. 5.

The electronic terminal for obtaining geographical location information provided in this embodiment of the present invention obtains attribute information of a reference object corresponding to a to-be-operated object; when the attribute information includes geographical location information, determines at least one reference object with a minimum difference value between a generation moment of the reference object and a generation moment of the to-be-operated object; and uses the geographical location information of the reference object as geographical location information of the to-be-operated object. As compared with the prior art in which geographical location information of a to-be-operated object can be determined only when a GPS positioning function or a network positioning function can be normally used, in technical solutions of the present invention, other existing address information can be used to deduce geographical location information of a to-be-operated object, and this process does not need to depend on the GPS positioning function and the network positioning function.

It may be clearly understood by a person skilled in the art that, for the purpose of convenient and brief description, division of the foregoing function modules is taken as an example for description. In actual application, the foregoing functions can be allocated to different function modules and implemented according to a requirement, that is, an inner structure of an apparatus is divided into different function modules to implement all or some of the functions described above. For a detailed working process of the foregoing system, apparatus, and unit, reference may be made to a corresponding process in the foregoing method embodiments, and details are no longer described herein.

In the several embodiments provided in this application, it should be understood that the disclosed system, apparatus, and method may be implemented in other manners. For example, the described apparatus embodiment is merely exemplary. For example, the module or unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or a part of the technical solutions may be implemented in the form of a software product. The software product is stored in a storage medium and includes several instructions for instructing a computer device (which may be a personal computer, a server, or a network device) or a processor (processor) to perform all or a part of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for obtaining geographical location information, wherein the method comprises:
obtaining attribute information of a reference object corresponding to a to-be-operated object;
when the attribute information of the reference object comprises geographical location information, determining at least one reference object with a minimum difference value between a generation moment of the reference object and a generation moment of the to-be-operated object, and using geographical location information of the determined at least one reference object as geographical location information of the to-be-operated object, wherein
the to-be-operated object is a file in which attribute information does not comprise the geographical location information, the reference object is a file, and the difference value between the generation moment of the reference object and the generation moment of the to-be-operated object is comprised in a preset value field.

2. The method according to claim 1, wherein the method further comprises:
when the attribute information of the reference object does not comprise the geographical location information,
obtaining geographical location information of a reference application within a preset time period, wherein difference values between start and stop moments of the preset time period and the generation moment of the to-be-operated object are comprised in the preset value field; and writing the geographical location information of the reference application into the geographical location information of the to-be-operated object; or
obtaining geographical location information of an auxiliary reference object and obtaining geographical location information of a reference application within a preset time period, wherein difference values between start and stop moments of the preset time period and the generation moment of the to-be-operated object are comprised in the preset value field; and writing same geographical location information between the geographical location information of the reference application and the geographical location information of the auxiliary reference object into the geographical location information of the to-be-operated object, wherein the auxiliary reference object is a file with a difference value between a generation moment of the file and the generation moment of the to-be-operated object being not comprised in the preset value field.

3. The method according to claim 1, wherein the determining at least one reference object with a minimum difference value between a generation moment of the reference object and a generation moment of the to-be-operated object, and using geographical location information of the determined at least one reference object as geographical location information of the to-be-operated object specifically comprises:
obtaining a file with a minimum difference value between a generation moment of the file and the generation moment of the to-be-operated object, wherein
when the generation moment of the file with the minimum difference value between the generation moment of the file and the generation moment of the to-be-operated object is earlier or later than the generation moment of the to-be-operated object, the reference object is the single file with the minimum difference value between the generation moment of the file and the generation moment of the to-be-operated object; and
writing geographical location information of the single file into the geographical location information of the to-be-operated object.

4. The method according to claim 1, wherein the determining at least one reference object with a minimum difference value between a generation moment of the reference object and a generation moment of the to-be-operated object, and using geographical location information of the determined at least one reference object as geographical location information of the to-be-operated object specifically comprises:
obtaining a file with a minimum difference value between a generation moment of the file and the generation moment of the to-be-operated object, wherein
when the generation moment of the file with the minimum difference value between the generation moment of the file and the generation moment of the to-be-operated object comprises generation moments that are earlier and later than the generation moment of the to-be-operated object, the reference object is multiple files with minimum difference values between the generation moments of the files and the generation moment of the to-be-operated object; and
writing same geographical location information in geographical location information of the multiple files into the geographical location information of the to-be-operated object.

5. The method according to claim 1, wherein the method further comprises:
when the attribute information of the reference object does not comprise the geographical location information, obtaining geographical location information corresponding to the to-be-operated object; and
writing the geographical location information into the geographical location information of the to-be-operated object.

6. An apparatus for obtaining geographical location information, wherein the apparatus comprises:
an obtaining unit, configured to obtain attribute information of a reference object corresponding to a to-be-operated object;
a determining unit, configured to: when the attribute information, obtained by the obtaining unit, of the reference object comprises geographical location information, determine at least one reference object with a minimum difference value between a generation moment of the reference object and a generation moment of the to-be-operated object; and
a location write unit, configured to use, as geographical location information of the to-be-operated object, geographical location information of the at least one reference object determined by the determining unit, wherein
the to-be-operated object is a file in which attribute information does not comprise the geographical location information, the reference object is a file, and the difference value between the generation moment of the reference object and the generation moment of the to-be-operated object is comprised in a preset value field.

7. The apparatus according to claim 6, wherein the apparatus further comprises:
the obtaining unit, further configured to: when the attribute information of the reference object does not comprise the geographical location information, obtain geographical location information of a reference application within a preset time period, wherein
difference values between start and stop moments of the preset time period and the generation moment of the to-be-operated object are comprised in the preset value field; difference values between start and stop moments of the preset time period and the generation moment of the to-be-operated object are comprised in the preset value field;
the location write unit, configured to write the geographical location information, obtained by the obtaining unit, of the reference application into the geographical location information of the to-be-operated object; or
the obtaining unit, further configured to obtain geographical location information of an auxiliary reference object and obtain geographical location information of a reference application within a preset time period; and
the location write unit, further configured to write same geographical location information between the geographical location information, obtained by the obtaining unit, of the reference application and the geographical location information of the auxiliary reference object into the geographical location information of the to-be-operated object, wherein
the auxiliary reference object is a file with a difference value between a generation moment of the file and the generation moment of the to-be-operated object being not comprised in the preset value field.

8. The apparatus according to claim 6, wherein the determining unit comprises:
an obtaining subunit, configured to obtain a file with a minimum difference value between a generation moment of the file and the generation moment of the to-be-operated object, wherein
when the generation moment of the file with the minimum difference value between the generation moment of the file and the generation moment of the to-be-operated object is earlier or later than the generation moment of the to-be-operated object, the reference object is the single file with the minimum difference value between the generation moment of the file and the generation moment of the to-be-operated object; and
a first location write subunit, configured to write geographical location information of the single file obtained by the obtaining subunit into the geographical location information of the to-be-operated object.

9. The apparatus according to claim 6, wherein the determining unit comprises:
an obtaining subunit, configured to obtain a file with a minimum difference value between a generation moment of the file and the generation moment of the to-be-operated object, wherein
when the generation moment of the file with the minimum difference value between the generation moment of the file and the generation moment of the to-be-operated object comprises generation moments that are earlier and later than the generation moment of the to-be-operated object, the reference object is multiple files with minimum difference values between the generation moments of the files and the generation moment of the to-be-operated object; and
a second location write subunit, configured to write same geographical location information in geographical location information of the multiple files obtained by the obtaining subunit into the geographical location information of the to-be-operated object.

10. The apparatus according to claim 6, wherein the apparatus further comprises:
the obtaining unit, further configured to: when the attribute information of the reference object does not comprise the geographical location information, obtain geographical location information corresponding to the to-be-operated object; and
the location write unit, configured to write the geographical location information obtained by the obtaining unit into the geographical location information of the to-be-operated object.

11. An electronic terminal, comprising:
a memory, configured to store information that comprises a program instruction; and
a processor, separately coupled to the memory to control execution of the program instruction, and specifically configured to obtain attribute information of a reference object corresponding to a to-be-operated object;
when the attribute information of the reference object comprises geographical location information, determine at least one reference object with a minimum difference value between a generation moment of the reference object and a generation moment of the to-be-operated object, and use geographical location information of the determined at least one reference object as geographical location information of the to-be-operated object, wherein
the to-be-operated object is a file in which attribute information does not comprise the geographical location information, the reference object is a file, and the difference value between the generation moment of the reference object and the generation moment of the to-be-operated object is comprised in a preset value field.

12. The electronic terminal according to claim 11, wherein the processor is further configured to: when the attribute information of the reference object does not comprise the geographical location information,
obtain geographical location information of a reference application within a preset time period, wherein difference values between start and stop moments of the preset time period and the generation moment of the to-be-operated object are comprised in the preset value field; and write the geographical location information of the reference application into the geographical location information of the to-be-operated object; or
obtain geographical location information of an auxiliary reference object and obtain geographical location information of a reference application within a preset time period, wherein difference values between start and stop moments of the preset time period and the generation moment of the to-be-operated object are comprised in the preset value field; and write same geographical location information between the geographical location information of the reference application and the geographical location information of the auxiliary reference object into the geographical location information of the to-be-operated object, wherein the auxiliary reference object is a file with a difference value between a generation moment of the file and the generation moment of the to-be-operated object being not comprised in the preset value field.

13. The electronic terminal according to claim 11, wherein
the processor is further configured to obtain a file with a minimum difference value between a generation moment of the file and the generation moment of the to-be-operated object, wherein
when the generation moment of the file with the minimum difference value between the generation moment of the file and the generation moment of the to-be-operated object is earlier or later than the generation moment of the to-be-operated object, the reference object is the single file with the minimum difference value between the generation moment of the file and the generation moment of the to-be-operated object; and
write geographical location information of the single file into the geographical location information of the to-be-operated object.

14. The electronic terminal according to claim 11, wherein
the processor is further configured to obtain a file with a minimum difference value between a generation moment of the file and the generation moment of the to-be-operated object, wherein
when the generation moment of the file with the minimum difference value between the generation moment of the file and the generation moment of the to-be-operated object comprises generation moments that are earlier and later than the generation moment of the to-be-operated object, the reference object is multiple files with minimum difference values between the generation moments of the files and the generation moment of the to-be-operated object; and
write same geographical location information in geographical location information of the multiple files into the geographical location information of the to-be-operated object.

15. The electronic terminal according to claim 11, wherein
the processor is further configured to: when the attribute information of the reference object does not comprise the geographical location information, obtain geographical location information corresponding to the to-be-operated object; and
write the geographical location information into the geographical location information of the to-be-operated object.
